# FASCICULE DE BREVET EUROPEEN

(11) **EP 3 185 341 B1**
(45) Date de publication et mention de la délivrance du brevet: **11.09.2019**
(21) Numéro de dépôt: 16201155.5
(22) Date de dépôt: 29.11.2016
(51) Int. Cl.: H01M 4/86, H01M 12/06, H01M 12/08, H01M 4/88

(54) **CATHODE DE PILE MÉTAL/AIR ET PROCÉDÉS DE FABRICATION D'UNE TELLE CATHODE**
KATHODE EINER METALL-LUFT-BATTERIE, UND HERSTELLUNGSVERFAHREN EINER SOLCHEN KATHODE
CATHODE OF A METAL/AIR CELL AND METHODS FOR MANUFACTURING SUCH A CATHODE

(30) Priorité: 21.12.2015 EP 15201689
(43) Date de publication de la demande: 28.06.2017
(73) Titulaire: The Swatch Group Research and Development Ltd, 2074 Marin (CH)
(72) Inventeur: Reinauer, Olga, 2000 Neuchâtel (CH); Stalder, Michael, 2564 Bellmund (CH); Züllig, Frédy, 2800 Delémont (CH)
(74) Mandataire: ICB SA

(56) Documents cités:
- FR-A1- 2 785 093
- FR-A1- 2 977 081
- PAN J ET AL: "Preliminary study of alkaline single flowing Zn-O2 battery", ELECTROCHEMISTRY COMMUNICATIONS, ELSEVIER, AMSTERDAM, NL, vol. 11, no. 11, 26 septembre 2009 (2009-09-26), pages 2191-2194, XP026737643, ISSN: 1388-2481, DOI: 10.1016/J.ELECOM.2009.09.028 [extrait le 2009-09-26]
- W L ET AL: "Maximizing Performance in the Harshest Environments precision woven filters @BULLET membrane reinforcement @BULLET support meshes @BULLET architectural fabrics USA/Canada/Far East/Latin America/South America Europe/Middle East/Africa", 2300 China W. L. Gore & Associates (China) Ltd. @BULLET 43F, United Plaza @BULLET 1468 Nanjing Road West @BULLET Shanghai 200040 @BULLET CHINA Tel, 1 janvier 1999 (1999-01-01), pages 86-21, XP055253230, Extrait de l'Internet: URL:https://www.gore.com/MungoBlobs/1022/1 56/gore_ePTFE_fibers_solution.pdf [extrait le 2016-02-22]

## Description

### Domaine de l'invention

L'invention concerne une cathode de pile métal/air comprenant au moins une couche active réalisée dans un matériau actif et présentant un côté air et un côté métal, un collecteur de courant et une membrane réalisée dans un matériau hydrophobe et déposée sur le côté air de la couche active. La présente invention concerne également des procédés de fabrication d'une telle cathode, ainsi qu'une pile métal/air comprenant une telle cathode.

### Arrière-plan de l'invention

Une cathode de pile métal/air est généralement utilisée dans une pile bouton. Elle se présente sous la forme d'un disque situé sous des trous d'aération prévus dans le boitier. Un papier diffuseur d'air est généralement positionné entre le boitier et la cathode. Contrairement à d'autres types de piles, la cathode dans une pile métal/air doit stocker seulement la quantité de matériau électro-actif (typiquement l'oxygène) nécessaire aux besoins immédiats de la pile, le reste étant remplacé au fur et à mesure depuis l'extérieur, par les trous d'aération. Pour cette raison, la cathode peut être réalisée à partir d'une bande très mince, laissant la majorité du volume de la pile à disposition pour l'anode (par exemple du zinc dans le cas d'une pile zinc/air).

La cathode de pile métal/air est constituée au minimum d'un collecteur de courant (par exemple treillis de nickel), qui amène les électrons depuis le boitier de la pile vers le catalyseur, l'air et l'électrolyte, ainsi que d'un catalyseur qui favorise le transfert d'électrons vers l'oxygène qui est réduit en hydroxyde, créant ainsi un courant électrique. Un tel catalyseur est par exemple un oxyde de manganèse.

La difficulté pour réaliser la cathode d'une pile métal/air provient du fait que le catalyseur doit être à la fois en contact avec le collecteur de courant (solide), l'air (gazeux) et l'électrolyte (liquide). Il est particulièrement complexe de parvenir à faire coexister ces trois phases sur une surface la plus grande possible. Pour résoudre ce problème, une solution pour agrandir l'interface entre l'air, l'électrolyte et le catalyseur, et ainsi améliorer la puissance de la pile, consiste à conférer une certaine hydrophobicité à la cathode. L'ajout d'additifs hydrophobes dans la composition de la cathode permet d'éviter que l'intégralité de la cathode ne soit noyée par l'électrolyte et de laisser ainsi de la place à l'air pour mieux pénétrer dans la cathode. A cet effet, on utilise typiquement un liant hydrophobe, tel que le polytétrafluoroéthylène (PTFE), sous la forme de poudre ou d'une dispersion aqueuse. L'ajout d'un tel liant hydrophobe permet d'augmenter la puissance de la cathode en fonction de la concentration en PTFE mais jusqu'à une concentration optimale (typiquement 15-20%) au-delà de laquelle la puissance de la pile diminue. Cette perte de puissance est due à la dispersion homogène du PTFE dans toute la cathode, ce qui a pour effet de diminuer la conductivité électrique (interruption par le PTFE du réseau de percolation formé par les particules de carbone) et de diminuer également la quantité d'électrolyte dans la cathode.

Une autre solution pour agrandir l'interface entre l'air, l'électrolyte et le catalyseur consiste à utiliser une cathode présentant une structure poreuse permettant à l'électrolyte et à l'air de mieux pénétrer dans la cathode. Typiquement, une telle structure poreuse est obtenue en utilisant un mélange de différentes particules conductrices, telles que des particules de carbones conducteurs (noir de carbone, graphite, etc...).

Une telle cathode est par exemple décrite dans la demande de brevet US 2014/0308594. Selon ce document, la cathode comprend une couche active présentant une structure poreuse dont la porosité décroit entre le côté air et le côté métal de la cathode. Il est décrit différents procédés de fabrication permettant d'obtenir une couche active qui présente un gradient de porosité dans l'épaisseur de la couche active au lieu d'une structure poreuse uniforme. Ce gradient de porosité est dû à une variation de la porosité intrinsèque du matériau de la couche active de la cathode contrôlée lors de sa fabrication.

Le brevet FR 2785093 décrit également une cathode dont la couche active possède des pores et comprend des particules de graphite dont la taille moyenne est supérieure au diamètre moyen des pores de la couche active. La cathode comprend en outre une couche de diffusion qui est une membrane hydrophobe déposée sur le côté air de la couche active. Cette membrane hydrophobe est de type Gore-Tex® qui est du polytétrafluoroéthylène expansé (ePTFE). La cathode est obtenue en préparant la couche active sous la forme d'une pâte, puis la pâte est étalée sur une face du collecteur de courant. La membrane de type Goretex® est appliquée sur l'autre face. Puis la cathode est séchée et comprimée. Dans cette cathode, la membrane hydrophobe, du fait de sa structure, reste d'épaisseur constante, et a pour seul rôle de rendre la surface de la cathode plus hydrophobe afin d'accroitre sa résistance au noyage.

Les piles métal/air, essentiellement zinc/air, sont couramment utilisées dans les appareils auditifs en raison de leur densité d'énergie la plus élevée parmi les piles commerciales. Pour cette application, les piles métal/air doivent être remplacées chaque semaine et ne sont donc pas optimisées quant à leur durée de vie mais sont déjà optimisées quant à leur puissance. Mais pour des applications telles que les montres connectées, qui impliquent des pics de courant très élevés pour des piles primaires, il est nécessaire de disposer de piles présentant une plus grande puissance. La puissance des piles métal/air étant limitée par leur cathode, il est nécessaire de développer des cathodes permettant d'obtenir une augmentation de puissance de la pile qui ne s'atténue que faiblement au fil du temps, pour devenir ainsi utile à une application horlogère.

### Résumé de l'invention

A cet effet, la présente invention concerne une cathode de pile métal/air selon la revendication 1.

La présente invention concerne également une pile métal/air comprenant au moins une anode à base dudit métal, une cathode telle que définie ci-dessus et un électrolyte.

La zone d'interpénétration du matériau hydrophobe dans le matériau actif dans laquelle existe un gradient de concentration en matériau hydrophobe diminuant dans le sens entrant de l'air dans la cathode permet d'augmenter localement la quantité de matériau hydrophobe et donc l'hydrophobicité du côté air de la couche active, puis de diminuer la quantité de matériau hydrophobe, et donc l'hydrophobicité, lorsque l'on s'éloigne du côté air de la couche active. L'augmentation locale de l'hydrophobicité du côté air de la couche active a pour effet d'augmenter le volume d'air à la fois en contact avec l'électrolyte et le catalyseur. Ainsi la surface de contact entre les trois phases solide/liquide/gazeuse est augmentée. Puis la diminution de l'hydrophobicité, lorsque l'on s'éloigne du côté air de la couche active, engendre une diminution de la quantité d'air en faveur d'une augmentation de la quantité d'électrolyte. Cette configuration est optimale pour la cathode puisque la quantité d'anions qui sera transportable par l'électrolyte entre la cathode et l'anode, et dont dépend la puissance de la pile, augmente avec l'épaisseur.

### Description sommaire des dessins

D'autres caractéristiques et avantages de l'invention apparaîtront plus clairement à la lecture de la description suivante d'un mode de réalisation de l'invention, donné à titre de simple exemple illustratif et non limitatif, et des figures annexées, parmi lesquelles :
- la figure 1 est une vue en coupe partielle d'une pile selon l'invention,
- la figure 2 est une image par stéréomicroscope d'une coupe d'une cathode selon l'invention, et
- la figure 3 est une vue en coupe partielle d'une pile selon l'art antérieur.

### Description détaillée d'un mode de réalisation préféré

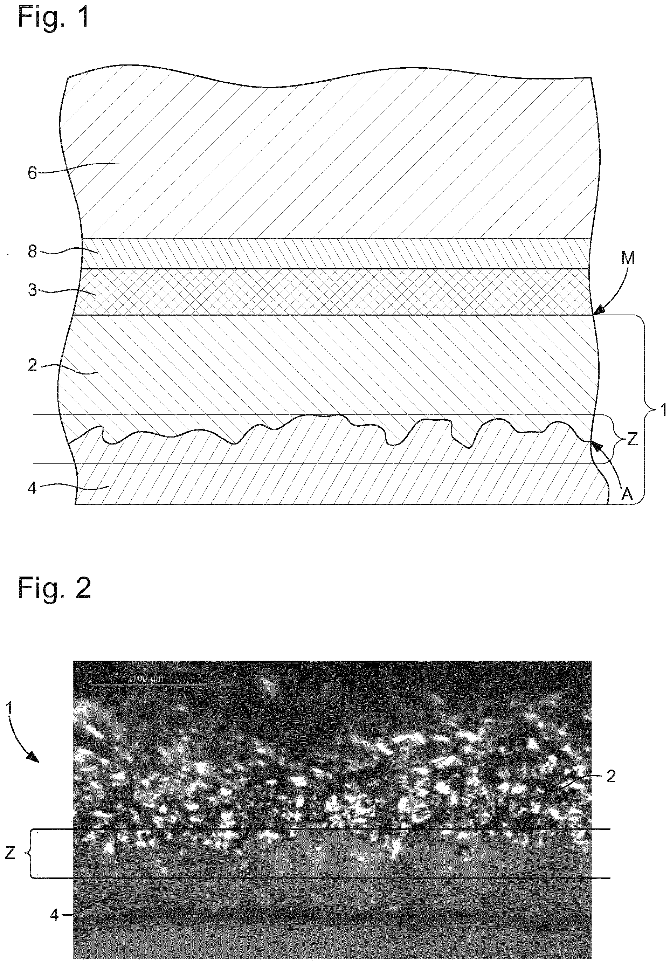

En référence aux figures 1 et 2, la présente invention concerne une cathode 1 de pile métal/air comprenant au moins une couche active 2 réalisée dans un matériau actif et présentant un côté air A et un côté métal M. La couche active 2 de la cathode de l'invention est tout à fait classique et connue de l'homme du métier, de sorte qu'une description détaillée d'une telle couche active n'est pas nécessaire. On précisera simplement que la couche active présente de préférence une structure poreuse. En outre le matériau actif de la couche active comprend, d'une manière connue, au moins un liant, un catalyseur et des particules conductrices permettant d'obtenir une structure poreuse. Le liant est de préférence un liant hydrophobe, tel que du polytétrafluoroéthylène (PTFE) ou tout autre liant hydrophobe approprié. Le catalyseur peut être choisi parmi les métaux précieux et les oxydes métalliques.De préférence, le catalyseur est un oxyde de manganèse Mn₂O₃ ou tout autre catalyseur approprié. Les particules conductrices sont de préférence un mélange de différents carbones conducteurs, tels que des particules de noir de carbone ou de graphite. La couche active 2 peut être déposée en plusieurs couches.

La cathode comprend également de manière connue un collecteur de courant 3, qui est par exemple une grille, un treillis, une mousse ou un feutre conducteur, telle qu'une grille ou une mousse de nickel.

La cathode comprend également une membrane hydrophobe 4 réalisée dans un matériau hydrophobe et déposée sur le côté air de la couche active.

Conformément à la présente invention, ledit matériau hydrophobe présente une structure poreuse et a pénétré dans le côté air A de la couche active 2 de manière à former, entre la membrane hydrophobe 4 et le côté air A de la couche active 2, une zone d'interpénétration Z du matériau hydrophobe dans le matériau actif dans laquelle existe un gradient de concentration en matériau hydrophobe diminuant dans le sens entrant de l'air dans la cathode (soit du côté air A vers le côté métal M).

Ainsi, la concentration en matériau hydrophobe dans la zone d'interpénétration Z évolue de 100% à 0% dans le sens entrant de l'air dans la cathode, la zone d'interpénétration Z s'étendant sur une épaisseur comprise entre 10 et 25% de l'épaisseur totale de la couche active.

La structure poreuse du matériau hydrophobe de la membrane hydrophobe 4 se présente sous la forme d'une matrice de fibrilles interconnectant des noeuds solides, l'espace entre les noeuds et les fibrilles constituant de préférence des pores microscopiques de taille moyenne comprise entre 30 µm et 100 µm, et de préférence entre 50 µm et 80 µm.

La membrane hydrophobe 4 présente une densité comprise entre 0.2 g/cm³ et 0.5 g/cm³.

Le matériau hydrophobe est un polymère fluoré extrudé puis expansé. Plus particulièrement, le matériau hydrophobe de la membrane hydrophobe 4 est du polytétrafluoroéthylène (PTFE) extrudé puis expansé. La membrane hydrophobe 4 est par exemple une membrane Aeos® commercialisée par Zeus Inc. L'épaisseur de la membrane hydrophobe avant son utilisation est comprise entre 0.2 mm et 5 mm, de préférence entre 0.5 mm et 5 mm, et plus préférentiellement entre 0.5 mm et 2 mm.

La présente invention concerne également une première variante d'un procédé de fabrication d'une cathode de pile métal/air telle que décrite ci-dessus, comprenant les étapes définies par la revendication 4.

La présente invention concerne également une deuxième variante d'un procédé de fabrication d'une cathode de pile métal/air telle que décrite ci-dessus, comprenant les étapes définies par la revendication 5.

L'utilisation de la couche active sous la forme d'une pâte permet de déformer ladite couche active plus facilement sous pression qu'une cathode pressée à sec.

De préférence, l'application d'une pression aux étapes d), c') et f') est réalisée par un procédé de laminage, les étapes de laminage pouvant avantageusement être réalisées au moyen d'un laminoir à rouleaux.

Les procédés selon l'invention comprennent respectivement une étape de séchage de la cathode obtenue après l'étape d) ou f'). Le séchage est de préférence réalisé sous vide. Après le séchage, la cathode peut être laminée encore une fois avec une pression inférieure ou égale à une pression correspondant à une charge linéaire de 150 N/mm, soit 3 MPa.

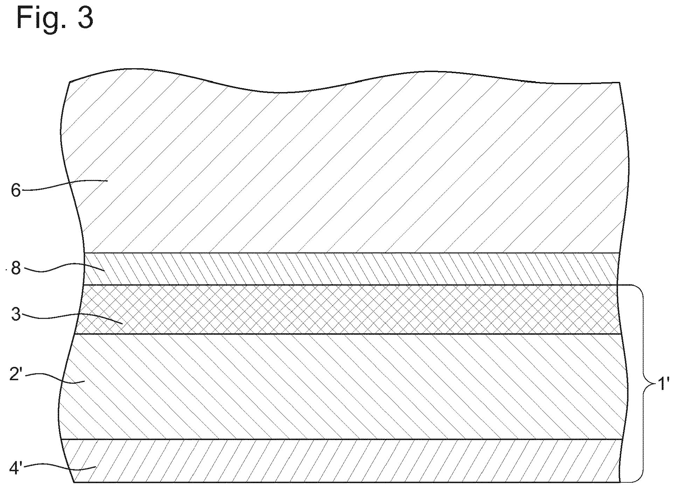

Dans la cathode de l'invention, du fait de l'utilisation d'une couche active sous forme d'une pâte et d'une membrane hydrophobe présentant une morphologie spécifique comprenant de grands pores fibrillaires d'une part et de l'utilisation d'un procédé permettant d'appliquer une pression sur la membrane hydrophobe pour assembler ladite membrane hydrophobe sur la couche active d'autre part, le matériau hydrophobe de la membrane hydrophobe 4 a pénétré dans la couche active 2 de la cathode, comme le montrent les figures 1 et 2 pour créer la zone d'interpénétration Z et le gradient de concentration en matériau hydrophobe. Dans les cathodes 1' des piles de l'art antérieur telles que représentée sur la figure 3, la membrane hydrophobe 4' déposée sur la couche active 2' reste à sa surface (les références des autres éléments de la pile restant identiques par ailleurs), de sorte que la dispersion du PTFE, en tant que liant, reste homogène.

Une fois laminée sur la cathode 1, la membrane hydrophobe 4 est fortement comprimée de sorte qu'elle n'ajoute pas plus de 0.1 mm d'épaisseur, comme une membrane hydrophobe utilisée classiquement. Ainsi, il n'y a pas de risque d'augmenter l'épaisseur de la cathode et de diminuer l'énergie stockable dans la pile. De plus, la porosité de la membrane hydrophobe une fois laminée est diminuée d'un facteur 10 ou plus, de sorte que le vieillissement par séchage/noyade reste similaire à celui d'une pile standard.

La présente invention concerne également une pile métal/air comprenant au moins une anode 6 à base dudit métal, une cathode telle que décrite ci-dessus, et un électrolyte.

L'anode peut être à base d'un métal tel que Li, Na, Mg et Zn. De préférence, l'anode est réalisée à base de poudre de zinc.

L'électrolyte est par exemple une solution de KOH.

La pile comprend également un séparateur 8 placé entre la cathode et l'anode. On utilise par exemple un séparateur en cellulose. L'électrolyte mouille le séparateur, l'anode et la cathode.

La pile métal/air se présente de préférence sous la forme d'une pile bouton et est assemblée en plaçant la cathode côté membrane hydrophobe contre l'ouverture dans le boitier. Un diffuseur d'air peut être placé entre la cathode et le couvercle de la pile. La pile possède également un joint d'étanchéité.

La pile obtenue selon l'invention n'a pas d'inconvénients par rapport à une pile connue. Par contre, elle a l'avantage de présenter une puissance améliorée d'environ 10% par rapport à des piles standards. En effet, l'utilisation d'une membrane hydrophobe présentant une morphologie spécifique comprenant de grands pores fibrillaires pour créer la zone d'interpénétration Z et le gradient de concentration en matériau hydrophobe permet de créer une matrice hydrophobe tridimensionnelle à morphologie variable et ainsi d'augmenter la surface de contact gaz/liquide/solide dans la couche active de la cathode.

Les exemples suivants illustrent la présente invention sans toutefois en limiter la portée.

On réalise une pâte correspondant au matériau actif de la cathode en mélangeant 25 % en poids de Mn₂O₃, 51 % de graphite, 15% de noir de carbone et 9% de PTFE dispersé dans l'eau. On ajoute de l'éthanol afin d'obtenir une dispersion avec 15 % en masse de la matière solide. On mélange avec un agitateur magnétique. Le mélange obtenu est versé dans le récipient de broyage d'un broyeur planétaire avec des billes en agate SiO₂ de diamètre entre 5 et 20 mm. Le mélange est broyé dans le broyeur planétaire avec une vitesse de rotation et le temps de broyage adaptés au type de broyeur et les conditions de broyage. Le broyage peut aussi être fait en plusieurs étapes en variant la taille des billes et les vitesses de rotation. La dispersion broyée est filtrée sous vide puis la matière solide est récupérée. La matière solide est sous forme de pâte, qui peut être pétrie si nécessaire.

### Laminage en une étape

La pâte est placée sur une grille de nickel. La membrane hydrophobe est placée sur la pâte. L'ensemble est laminé avec un laminoir à rouleaux avec une pression correspondant à une charge linéaire ne dépassant pas 150 N/mm, soit 3 MPa.

### Laminage en deux étapes

La pâte est placée sur une grille de nickel. La pâte est laminée avec un laminoir à rouleaux avec une pression correspondant à une charge linéaire d'au moins 250 N/mm, soit au moins 5 MPa. La valeur maximale de pression qui pourrait être appliquée correspond à une charge linéaire de 375 N/mm, soit 7.5 MPa. Une deuxième couche de pâte est placée sur la partie laminée. La membrane hydrophobe est placée par-dessus. L'ensemble est laminé avec un laminoir à rouleaux avec une pression correspondant à une charge linéaire ne dépassant pas 150 N/mm, soit 3 MPa.

La cathode préparée est séchée sous vide à 90°C pendant 16 heures. Après le séchage, la cathode peut être laminée encore une fois avec une pression correspondant à une charge linéaire ne dépassant pas 150 N/mm. Une pile Zn-air de type « bouton » est assemblée avec la cathode préparée. L'anode est de la poudre de zinc, l'électrolyte est une solution de KOH 9M, le séparateur est en cellulose.

A titre d'exemple comparatif, une pile similaire est réalisée, mais en utilisant une cathode standard fabriquée par compression des poudres.

Le diamètre de la cathode est 19 mm.

### Résultats

Les piles Zn-air avec une cathode constituée de la pâte et de la membrane hydrophobe selon l'invention et laminée en une étape selon un procédé de l'invention ont une puissance de 68 mW, alors que la pile contenant une cathode standard et la membrane hydrophobe ont une puissance de 60 mW, soit une augmentation de puissance de plus de 13%.

## Revendications

1. Cathode (1) de pile métal/air comprenant au moins une couche active (2) réalisée dans un matériau actif et présentant un côté air (A) et un côté métal (M), un collecteur de courant (3), et une membrane hydrophobe (4) réalisée dans un matériau hydrophobe et déposée sur le côté air (A) de la couche active (2), ledit matériau hydrophobe présentant une structure poreuse et ledit matériau hydrophobe ayant pénétré dans le côté air (A) de la couche active (2) de manière à former, entre la membrane hydrophobe (4) et la couche active (2), une zone d'interpénétration (Z) du matériau hydrophobe dans le matériau actif dans laquelle existe un gradient de concentration en matériau hydrophobe diminuant dans le sens entrant de l'air dans la cathode,
**caractérisée en ce que** le matériau hydrophobe est un polymère fluoré extrudé puis expansé dont la structure poreuse se présente sous la forme d'une matrice de fibrilles interconnectant des noeuds solides, l'espace entre les noeuds et les fibrilles constituant des pores microscopiques, et **en ce que** la concentration en matériau hydrophobe dans la zone d'interpénétration (Z) évolue de 100% à 0% dans le sens entrant de l'air dans la cathode, la zone d'interpénétration s'étendant sur une épaisseur comprise entre 10 et 25% de l'épaisseur totale de la couche active.

2. Cathode selon la revendication précédente, **caractérisée en ce que** le matériau actif comprend au moins un liant, un catalyseur et des particules conductrices.

3. Pile métal/air comprenant au moins une anode à base dudit métal, une cathode selon l'une des revendications 1 à 2, et un électrolyte.

4. Procédé de fabrication d'une cathode de pile métal/air selon l'une des revendications 1 à 2, comprenant les étapes de :
a) préparer le matériau actif de la couche active (2) sous la forme d'une pâte
b) déposer la pâte obtenue à l'étape a) sur le collecteur de courant (3)
c) déposer une membrane hydrophobe (4) réalisée dans un matériau hydrophobe présentant une structure poreuse sur la pâte telle qu'obtenue à l'étape b), le matériau hydrophobe étant un polymère fluoré extrudé puis expansé dont la structure poreuse se présente sous la forme d'une matrice de fibrilles interconnectant des noeuds solides, l'espace entre les noeuds et les fibrilles constituant des pores microscopiques, la membrane hydrophobe présentant une densité comprise entre 0.2 g/cm³ et 0.5 g/cm³ et une épaisseur comprise entre 0.2 mm et 5 mm
d) appliquer une pression sur l'ensemble obtenu à l'étape c), la pression étant de préférence inférieure ou égale à une pression correspondant à une charge linéaire de 150 N/mm, soit 3 MPa, de manière à former, entre la membrane hydrophobe (4) et la couche active (2), une zone d'interpénétration (Z) du matériau hydrophobe dans le matériau actif dans laquelle existe un gradient de concentration en matériau hydrophobe diminuant dans le sens entrant de l'air dans la cathode, la concentration en matériau hydrophobe dans la zone d'interpénétration (Z) évoluant de 100% à 0% dans le sens entrant de l'air dans la cathode, la zone d'interpénétration s'étendant sur une épaisseur comprise entre 10 et 25% de l'épaisseur totale de la couche active,
le procédé comprenant une étape de séchage de la cathode obtenue après l'étape d).

5. Procédé de fabrication d'une cathode de pile métal/air selon l'une des revendications 1 à 2, comprenant les étapes de :
a') préparer le matériau actif de la couche active (2) sous la forme d'une pâte
b') déposer une première couche de la pâte obtenue à l'étape a) sur le collecteur de courant (3)
c') appliquer une pression sur l'ensemble obtenu à l'étape b'), la pression étant de préférence supérieure ou égale à une pression correspondant à une charge linéaire de 250 N/mm, soit 5 MPa
d') déposer une deuxième couche de pâte sur l'ensemble obtenu à l'étape c')
e') déposer une membrane hydrophobe (4) réalisée dans un matériau hydrophobe présentant une structure poreuse sur la deuxième couche de pâte telle qu'obtenue à l'étape d'), ledit matériau hydrophobe étant un polymère fluoré extrudé puis expansé dont la structure poreuse se présente sous la forme d'une matrice de fibrilles interconnectant des noeuds solides, l'espace entre les noeuds et les fibrilles constituant des pores microscopiques, la membrane hydrophobe présentant une densité comprise entre 0.2 g/cm³ et 0.5 g/cm³ et une épaisseur comprise entre 0.2 mm et 5 mm
f) appliquer une pression sur l'ensemble obtenu à l'étape e'), la pression étant de préférence inférieure ou égale à une pression correspondant à une charge linéaire de 150 N/mm, soit 3 MPa, de manière à former, entre la membrane hydrophobe (4) et la couche active (2), une zone d'interpénétration (Z) du matériau hydrophobe dans le matériau actif dans laquelle existe un gradient de concentration en matériau hydrophobe diminuant dans le sens entrant de l'air dans la cathode, la concentration en matériau hydrophobe dans la zone d'interpénétration (Z) évoluant de 100% à 0% dans le sens entrant de l'air dans la cathode, la zone d'interpénétration s'étendant sur une épaisseur comprise entre 10 et 25% de l'épaisseur totale de la couche active,
le procédé comprenant une étape de séchage de la cathode obtenue après l'étape f.

6. Procédé de fabrication selon l'une des revendications 4 à 5, **caractérisé en ce que** les pores microscopiques de la structure poreuse du matériau hydrophobe de la membrane hydrophobe présentent une taille moyenne comprise entre 30 et 100 µm.

## Patentansprüche

1. Kathode (1) einer Metall/Luft-Batterie, umfassend mindestens eine aktive Schicht (2), die aus einem aktiven Material hergestellt ist und eine Luftseite (A) und eine Metallseite (M) aufweist, einen Stromabnehmer (3) und eine hydrophobe Membran (4), die aus einem hydrophoben Material hergestellt ist und auf der Luftseite (A) der aktiven Schicht (2) abgelagert ist, wobei das hydrophobe Material eine poröse Struktur aufweist und das hydrophobe Material in die Luftseite (A) der aktiven Schicht (2) eingedrungen ist, derart, dass zwischen der hydrophoben Membran (4) und der aktiven Schicht (2) eine Interpenetrationszone (Z) des hydrophoben Materials in das aktive Material gebildet ist, in der es einen hydrophoben Materialkonzentrationsgradienten gibt, der in Richtung des Lufteintritts in die Kathode abnimmt,
**dadurch gekennzeichnet, dass** das hydrophobe Material ein extrudiertes und dann expandiertes Fluorpolymer ist, dessen poröse Struktur die Form einer Matrix aus Fibrillen aufweist, die feste Knoten miteinander verbinden, wobei der Zwischenraum zwischen den Knoten und den Fibrillen mikroskopische Poren bildet, und dass die Konzentration des hydrophoben Materials in der Interpenetrationszone (Z) in Richtung des Lufteintritts in die Kathode von 100 % auf 0 % verläuft, wobei sich die Interpenetrationszone über eine Dicke erstreckt, die im Bereich von 10 bis 25 % der Gesamtdicke der aktiven Schicht liegt.

2. Kathode nach dem vorhergehenden Anspruch, **dadurch gekennzeichnet, dass** das aktive Material mindestens ein Bindemittel, einen Katalysator und leitende Partikel enthält.

3. Metall/Luft-Batterie, umfassend mindestens eine Anode auf Basis des Metalls, eine Kathode nach einem der Ansprüche 1 bis 2 und einen Elektrolyten.

4. Verfahren zum Herstellen einer Kathode einer Metall/Luft-Batterie nach einem der Ansprüche 1 bis 2, umfassend die Schritte:
a) Herstellen des aktiven Materials der aktiven Schicht (2) in Form einer Paste,
b) Ablagern der im Schritt a) erhaltenen Paste auf dem Stromabnehmer (3),
c) Ablagern einer hydrophoben Membran (4), die aus einem eine poröse Struktur aufweisenden hydrophoben Material hergestellt ist, auf der Paste, wie sie im Schritt b) erhalten wird, wobei das hydrophobe Material ein extrudiertes und dann expandiertes Fluorpolymer ist, dessen poröse Struktur die Form einer Matrix aus Fibrillen aufweist, die feste Knoten miteinander verbinden, wobei der Zwischenraum zwischen den Knoten und den Fasern mikroskopische Poren bildet, und die hydrophobe Membran eine Dichte im Bereich von 0,2 g/cm³ bis 0,5 g/cm³ und eine Dicke im Bereich von 0,2 mm bis 5 mm aufweist,
d) Ausüben eines Drucks auf die im Schritt c) erhaltene Gesamtheit, wobei der Druck vorzugsweise kleiner oder gleich einem Druck ist, der einer linearen Last von 150 N/mm, also 3 MPa, entspricht, derart, dass zwischen der hydrophoben Membran (4) und der aktiven Schicht (2) eine Interpenetrationszone (Z) des hydrophoben Materials in das aktive Material gebildet wird, in der es einen hydrophoben Materialkonzentrationsgradienten gibt, der in Richtung des Lufteintritts in die Kathode abnimmt, wobei die Konzentration des hydrophoben Materials in der Interpenetrationszone (Z) in Richtung des Lufteintritts in die Kathode von 100 % bis 0 % verläuft, wobei sich die Interpenetrationszone über eine Dicke im Bereich von 10 bis 25 % der Gesamtdicke der aktiven Schicht erstreckt,
und das Verfahren einen Schritt zum Trocknen der nach Schritt d) erhaltenen Kathode umfasst.

5. Verfahren zum Herstellen einer Kathode einer Metall/Luft-Batterie nach einem der Ansprüche 1 bis 2, umfassend die folgenden Schritte:
a') Herstellen des aktiven Materials der aktiven Schicht (2) in Form einer Paste,
b') Ablagern einer ersten Schicht der im Schritt a') erhaltenen Paste auf dem Stromabnehmer (3),
c') Ausüben eines Drucks auf die im Schritt b') erhaltene Gesamtheit, wobei der Druck vorzugsweise größer oder gleich einem Druck ist, der einer linearen Last von 250 N/mm, also 5 MPa entspricht,
d') Ablagern einer zweiten Schicht der Paste auf der im Schritt c') erhaltenen Gesamtheit,
e') Ablagern einer hydrophoben Membran (4), die aus einem eine poröse Struktur aufweisenden hydrophoben Material hergestellt ist, auf der zweiten Pastenschicht, wie sie im Schritt d') erhalten wird, wobei das hydrophobe Material ein extrudiertes und dann expandiertes Fluorpolymer ist, dessen poröse Struktur die Form einer Matrix von Fibrillen aufweist, die feste Knoten miteinander verbinden, wobei der Zwischenraum zwischen den Knoten und den Fibrillen mikroskopische Poren bildet, und die hydrophobe Membran eine Dichte im Bereich von 0,2 g/cm³ bis 0,5 g/cm³ und eine Dicke im Bereich von 0,2 mm bis 5 mm aufweist,
f) Ausüben eines Drucks auf die im Schritt e') erhaltene Gesamtheit, wobei der Druck vorzugsweise kleiner oder gleich einem Druck ist, der einer linearen Last von 150 N/mm, also 3 MPa, entspricht, derart, dass zwischen der hydrophoben Membran (4) und der aktiven Schicht (2) eine Interpenetrationszone (Z) des hydrophoben Materials in das aktive Material gebildet wird, in der es einen hydrophoben Materialkonzentrationsgradienten gibt, der in Richtung des Lufteintritts in die Kathode abnimmt, wobei die Konzentration des hydrophoben Materials in der Interpenetrationszone (Z) in Richtung des Lufteintritts in die Kathode von 100 % bis 0 % verläuft, und sich die Interpenetrationszone über eine Dicke im Bereich von 10 bis 25 % der Gesamtdicke der aktiven Schicht erstreckt,
und das Verfahren einen Schritt zum Trocknen der nach dem Schritt f') erhaltenen Kathode umfasst.

6. Herstellungsverfahren nach einem der Ansprüche 4 bis 5, **dadurch gekennzeichnet, dass** die mikroskopischen Poren der porösen Struktur des hydrophoben Materials der hydrophoben Membran eine mittlere Größe im Bereich von 30 bis 100 µm aufweisen.

## Claims

1. Cathode (1) of a metal/air cell comprising at least one active layer (2) made of an active material and having an air side (A) and a metal side (M), a current collector (3), and a hydrophobic membrane (4) made of a hydrophobic material and deposited on the air side (A) of the active layer (2), said hydrophobic material having a porous structure and said hydrophobic material having penetrated the air side (A) of the active layer (2) so as to form, between the hydrophobic membrane (4) and the active layer (2), an interpenetration area (Z) of the hydrophobic material in the active material in which exists a hydrophobic material concentration gradient that decreases in the direction in which the air enters the cathode,
**characterised in that** the hydrophobic material is an extruded then expanded fluorinated polymer, the porous structure whereof takes the form of an array of fibrils interconnecting solid nodes, the space between the nodes and the fibrils forming microscopic pores, and **in that** the concentration of hydrophobic material in the interpenetration area (Z) changes from 100% to 0% in the direction in which the air enters the cathode, the interpenetration area extending over a thickness that lies in the range 10 to 25% of the overall thickness of the active layer.

2. Cathode according to the previous claim, **characterised in that** the active material comprises at least one binder, a catalyst and conductive particles.

3. Metal/air cell comprising at least one anode based on said metal, a cathode according to either claim 1 or claim 2, and an electrolyte.

4. Method for manufacturing a cathode of a metal/air cell according to either claim 1 or claim 2, said method comprising the steps of:
a) preparing the active material of the active layer (2) in the form of a paste;
b) depositing the paste obtained in step a) on the current collector (3);
c) depositing a hydrophobic membrane (4) made of a hydrophobic material having a porous structure on the paste as obtained in step b), the hydrophobic material being an extruded then expanded fluorinated polymer, the porous structure whereof takes the form of an array of fibrils interconnecting solid nodes, the space between the nodes and the fibrils forming microscopic pores, the hydrophobic membrane having a density that lies in the range 0.2 g/cm³ to 0.5 g/cm³ and a thickness that lies in the range 0.2 mm to 5 mm;
d) applying pressure to the assembly obtained in step c), the pressure preferably being less than or equal to a pressure corresponding to a linear load of 150 N/mm, i.e. 3 MPa, so as to form, between the hydrophobic membrane (4) and the active layer (2), an interpenetration area (Z) of the hydrophobic material in the active material in which exists a hydrophobic material concentration gradient that decreases in the direction in which the air enters the cathode, the concentration of hydrophobic material in the interpenetration area (Z) changing from 100% to 0% in the direction in which the air enters the cathode, the interpenetration area extending over a thickness that lies in the range 10 to 25% of the overall thickness of the active layer;
the method comprising a step of drying the cathode obtained after step d).

5. Method for manufacturing a cathode of a metal/air cell according to either claim 1 or claim 2, said method comprising the steps of:
a') preparing the active material of the active layer (2) in the form of a paste;
b') depositing a first layer of the paste obtained in step a) on the current collector (3);
c') applying pressure to the assembly obtained in step b'), the pressure preferably being greater than or equal to a pressure corresponding to a linear load of 250 N/mm, i.e. 5 MPa;
d') depositing a second layer of paste on the assembly obtained in step c');
e') depositing a hydrophobic membrane (4) made of a hydrophobic material having a porous structure on the second layer of paste as obtained in step d'), said hydrophobic material being an extruded then expanded fluorinated polymer, the porous structure whereof takes the form of an array of fibrils interconnecting solid nodes, the space between the nodes and the fibrils forming microscopic pores, the hydrophobic membrane having a density that lies in the range 0.2 g/cm³ to 0.5 g/cm³ and a thickness that lies in the range 0.2 mm to 5 mm;
f) applying pressure to the assembly obtained in step e'), the pressure preferably being less than or equal to a pressure corresponding to a linear load of 150 N/mm, i.e. 3 MPa, so as to form, between the hydrophobic membrane (4) and the active layer (2), an interpenetration area (Z) of the hydrophobic material in the active material in which exists a hydrophobic material concentration gradient that decreases in the direction in which the air enters the cathode, the concentration of hydrophobic material in the interpenetration area (Z) changing from 100% to 0% in the direction in which the air enters the cathode, the interpenetration area extending over a thickness that lies in the range 10 to 25% of the overall thickness of the active layer;
the method comprising a step of drying the cathode obtained after step f').

6. Manufacturing method according to either claim 4 or claim 5, **characterised in that** the mean size of the microscopic pores of the porous structure of the hydrophobic material of the hydrophobic membrane lies in the range 30 to 100 µm.
